# FASCICULE DE BREVET EUROPEEN

(11) **EP 2 870 561 B1**
(45) Date de publication et mention de la délivrance du brevet: **17.10.2018**
(21) Numéro de dépôt: 13733283.9
(22) Date de dépôt: 01.07.2013
(51) Int. Cl.: G06F 21/10, G06F 17/22

(54) **PROCÉDÉ DE TATOUAGE DE LIVRES NUMÉRIQUES**
VERFAHREN ZUR WASSERZEICHENMARKIERUNG DIGITALER BÜCHER
METHOD OF WATER-MARKING DIGITAL BOOKS

(30) Priorité: 03.07.2012 FR 1256354
(43) Date de publication de la demande: 13.05.2015
(73) Titulaire: Viaccess, 92057 Paris La Défense (FR)
(72) Inventeur: CLISSON, Laurent, F-35410 Domloup (FR)
(74) Mandataire: GIE Innovation Competence Group
(86) Numéro de dépôt international: PCT/EP2013/063768
(87) Numéro de publication internationale: WO 2014/005966

(56) Documents cités:
- WO-A2-02/103461
- US-A1- 2004 001 606

## Description

L'invention concerne un procédé et un dispositif de tatouage de livres numériques avec des paramètres reliés par une fonction biunivoque à des identifiants respectifs. L'invention concerne également un support d'enregistrement d'informations ainsi qu'un programme d'ordinateur pour la mise en oeuvre de ce procédé. Enfin, l'invention a également pour objet un ensemble de livres numériques tatoués à l'aide du procédé ci-dessus.

Les procédés de tatouage sont également connus sous le terme anglais de « watermarking ». L'objectif de ces procédés de tatouage est d'encoder dans le livre numérique un identifiant d'une façon non perceptible par les utilisateurs. Cet identifiant est ensuite utilisé pour, par exemple, identifier l'utilisateur qui a mis à disposition une copie d'un livre numérique sur des réseaux de partage de contenus multimédias. Ainsi, le fait de tatouer un livre numérique avec un identifiant de l'acheteur peut dissuader cet acheteur de distribuer gratuitement le livre numérique qu'il a acheté.

Un livre numérique contient un texte préexistant dans lequel chaque caractère est codé par au moins un code et une police préexistante de caractères ou une référence à une police préexistante de caractères. Chaque police de caractères comporte des paires code-glyphe. Chaque paire code-glyphe associe un code du texte codé à un glyphe utilisé pour afficher un caractère sur un écran.

En micro-informatique, comme on peut produire tous les styles et tous les corps à partir de la représentation vectorielle d'une police, le terme « *police de caractères »* désigne un type de tracé de caractères, sans tenir compte du style, de la graisse et du corps. Par *type,* on entend la forme du tracé des caractères identifiée par un nom tel que « Times », « Courier », « Arial », ...etc.

Par « *style* », on désigne le degré d'inclinaison des caractères tels que les inclinaisons connues sous les termes de « romain » ou « italique ».

Par « *graisse »,* on désigne l'épaisseur du trait telles que les épaisseurs connues sous les termes de « maigre », « demi-gras », « gras ».

Par « *corps »,* on désigne la taille des caractères exprimée en points tels que 10, 12, 14, ...etc.

Une fonte de caractères est un ensemble de glyphes, c'est-à-dire de représentations visuelles de caractères, d'une même police d'écriture, de même style, corps et graisse. Ainsi, généralement, une police comprend plusieurs fontes de caractères.

Habituellement, une police de caractères associe à chaque glyphe d'un caractère un code. Les codes sont généralement définis par une norme telle que la norme Unicode.

Il existe également aujourd'hui plusieurs formats électroniques de polices de caractères tels que les formats TrueType et OpenType. Ces formats TrueType et OpenType sont des formats de police vectorielle.

Une police vectorielle est une police dans laquelle chaque glyphe est défini, non pas par une image matricielle, mais par des équations d'une ou de plusieurs courbes. Les courbes sont typiquement des courbes de Bézier. Avec les polices vectorielles, il est possible d'augmenter la taille du caractère sans qu'aucun effet de marche n'apparaisse lors de leur affichage.

Des procédés de tatouages connus d'un identifiant comportent :
- l'élaboration d'un nouveau texte à partir du texte préexistant, en remplaçant dans le texte préexistant un premier code de la police préexistante par un second code différent de la police préexistante, ce second code étant associé à un glyphe très similaire ou identique à celui associé au premier code, puis
- la fourniture en tant que livre numérique tatoué du nouveau texte et de la police préexistante.

Les premiers codes du texte préexistant qui sont remplacés par les seconds codes sont sélectionnés en fonction de la valeur de l'identifiant à encoder. Ainsi, le nouveau texte comporte à la fois des premiers et des seconds codes pour afficher le même glyphe sur l'écran ou des glyphes très similaires. C'est la position des premiers et seconds codes, les uns par rapport aux autres, dans le nouveau texte qui encode la valeur de l'identifiant dans le livre numérique tatoué par ce procédé.

Un tel procédé de tatouage est par exemple décrit dans la demande WO 2011/021 114.

Toutefois, les procédés connus ne sont pas robustes vis-à-vis des attaques par collusion. En effet, en comparant le texte codé contenu dans différentes copies du livre numérique tatoué avec des identifiants différents, il est assez simple de repérer les codes du texte codé qui ont été modifiés. Cette information est ensuite utilisée pour reconstruire le texte codé original qui ne comporte pas de tatouage. Par exemple, cette information permet de remplacer les seconds codes par les premiers codes pour reconstruire le texte original non tatoué.

De l'état de la technique est également connu de :
- WO02/103461A2,
- US2004/001606.

L'invention vise à remédier à cet inconvénient. Elle a donc pour objet un procédé de tatouage de livres numériques conforme à la revendication 1.

Dans le procédé ci-dessus, le livre tatoué affiché sur un écran quelconque est graphiquement rigoureusement identique au livre numérique contenant le texte préexistant et la police préexistante puisque les représentations graphiques des caractères sont les mêmes. En effet, la nouvelle police se distingue de la police préexistante non pas par la forme graphique de ses caractères, mais par le codage des glyphes. Il n'est donc pas possible de distinguer dans le livre affiché la présence d'un identifiant.

Dans la nouvelle police, le ou les codes utilisés pour obtenir la représentation graphique d'un caractère ne sont pas tous identiques à celui ou à ceux utilisés dans la police préexistante pour obtenir la même représentation graphique du même caractère. Par conséquent, dans le procédé ci-dessus, le codage du texte est aussi modifié pour remplacer le code préexistant par le ou les codes correspondants de la nouvelle police. Ainsi, le procédé ci-dessus associe de façon inséparable le nouveau texte codé et la nouvelle police. Dès lors, toute tentative visant à effacer l'identifiant encodé dans le livre numérique en remplaçant la nouvelle police par une autre est vaine, puisque le texte codé ne peut pas s'afficher correctement à l'écran avec une autre police. Cela rend aussi le procédé de tatouage robuste vis-à-vis d'autres tentatives de transformation du livre numérique comme, par exemple, un copier-coller du texte codé.

Enfin, la nouvelle police et le texte codé dépendent chacun de la valeur d'un paramètre relié par une fonction biunivoque à la valeur d'un identifiant.Ils sont donc chacun unique pour chaque valeur de l'identifiant. Dans ces conditions, le procédé ci-dessus est robuste vis-à-vis des attaques par collusion. En particulier, il n'est pas possible ou beaucoup plus difficile d'effacer ou de changer la valeur du paramètre encodé dans le livre en comparant ou en combinant différents nouveaux textes codés élaborés chacun à partir de paramètres dont les valeurs sont différentes.

Les modes de réalisation de ce procédé de tatouage peuvent comporter une ou plusieurs des caractéristiques des revendications dépendantes de procédé de tatouage.

Ces modes de réalisation du procédé de tatouage présentent en outre les avantages suivants :
- l'élaboration de la nouvelle police en remplaçant un code associé à un unique glyphe par un autre code différent permet de créer une nouvelle police sans avoir à créer ou à modifier des glyphes ;
- l'utilisation d'une permutation des codes des glyphes de la police préexistante pour créer la nouvelle police permet d'élaborer très simplement une nouvelle police très différente de la police préexistante ;
- l'élaboration de la nouvelle police en y ajoutant un nouveau glyphe obtenu par concaténation de glyphes ou de morceaux de glyphes de la police préexistante ou par le découpage d'un glyphe préexistant en plusieurs morceaux permet de créer très simplement un très grand nombre de nouvelles polices différentes ;
- la création d'un glyphe qui diffère du même glyphe de la police préexistante uniquement par son codage vectoriel permet de coder une information complémentaire de façon imperceptible dans la nouvelle police ;
- l'enregistrement d'une empreinte numérique de la nouvelle police ou du nouveau texte associé à la valeur de l'identifiant permet de retrouver simplement la valeur de cet identifiant à partir d'une copie du nouveau texte ou de la nouvelle police.

L'invention a également pour objet un support d'enregistrement d'informations ou un programme d'ordinateur comportant des instructions pour la mise en oeuvre du procédé ci-dessus lorsque ces instructions sont exécutées par un calculateur électronique.

L'invention a également pour objet un dispositif de tatouage conforme à la revendication 10.

L'invention a également pour objet un ensemble de livres numériques tatoués conforme à la revendication 11.

L'invention sera mieux comprise à la lecture de la description qui va suivre, donnée uniquement à titre d'exemple non limitatif, et faite en se référant aux dessins sur lesquels :
- la figure 1 est une illustration schématique d'un système de distribution d'un livre numérique,
- la figure 2 est une illustration schématique d'un texte codé du livre numérique, à distribuer par le système de la figure 1,
- la figure 3 est une illustration schématique d'une police de caractères contenue dans le livre numérique à distribuer par le système de la figure 1,
- la figure 4 est un organigramme d'un procédé de tatouage du livre numérique distribué par le système de la figure 1,
- les figures 5 et 6 sont des organigrammes de procédés permettant de retrouver la valeur de l'identifiant encodé dans le livre numérique tatoué selon le procédé de la figure 4,
- les figures 7 et 8 sont des illustrations schématiques, respectivement, d'une nouvelle police et d'un nouveau texte utilisant cette nouvelle police,
- les figures 9, 10, 12, 14 et 17 sont des illustrations de nouvelles polices élaborées selon différentes méthodes susceptibles d'être mise en oeuvre dans le procédé de la figure 4,
- les figures 11 et 13 sont des illustrations schématiques d'un texte codé à l'aide, respectivement, des polices des figures 10 et 12,
- les figures 15 et 16 sont des illustrations schématiques d'un même glyphe défini par deux codages vectoriels différents.

Dans ces figures, les mêmes références sont utilisées pour désigner les mêmes éléments.

Dans la suite de cette description, les caractéristiques et fonctions bien connues de l'homme du métier ne sont pas décrites en détail.

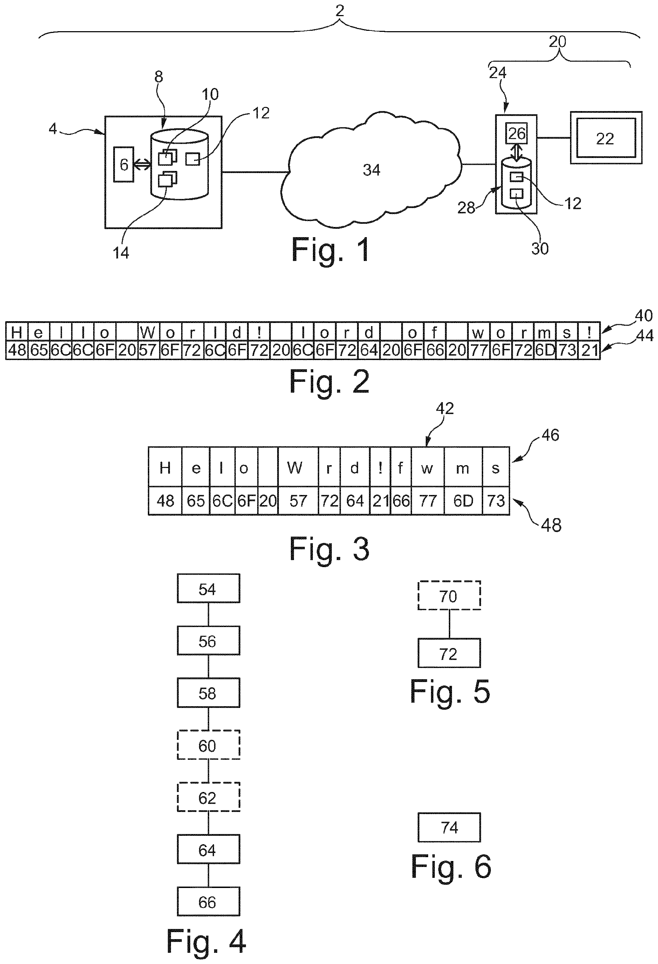

La figure 1 représente un système 2 de distribution de livres numériques. Ce système 2 comporte un serveur 4 de livres numériques. Le serveur 4 est équipé d'un calculateur électronique 6 programmable apte à exécuter des instructions enregistrées sur un support d'enregistrement d'informations. A cet effet, le calculateur 6 est raccordé à une mémoire 8. Cette mémoire 8 comporte les instructions nécessaires pour exécuter les procédés des figures 4 à 6.

La mémoire 8 comporte également un livre numérique 10 original ainsi qu'une version tatouée de ce livre numérique portant la référence numérique 12. Contrairement au livre numérique 12, le livre numérique 10 original ne comporte pas de paramètre, relié par une fonction biunivoque à un identifiant, encodé dans son contenu. Dans la suite de cette description, les modes de réalisation sont décrits dans le cas particulier où la fonction biunivoque qui relie la valeur du paramètre encodé dans le livre numérique à celle de l'identifiant est la fonction identité. Ainsi, dans les modes de réalisation détaillés ci-dessous ont dit que l'identifiant est directement encodé dans le livre numérique tatoué.

Ici, la mémoire 8 comporte également une base de données 14. La base de données 14 associe, pour chaque livre numérique tatoué, une empreinte numérique de la police de caractères incorporée dans ce livre à la valeur de l'identifiant tatoué dans ce livre. Ici, l'identifiant tatoué, noté Id₁, a une valeur uniquement encodable sur au moins deux bits d'information et, de préférence, sur au moins 8 ou 10 bits d'information. Dans ce mode de réalisation, la valeur de l'identifiant Id₁ permet d'identifier de façon unique l'acheteur du livre numérique parmi l'ensemble des acheteurs de ce livre auprès du serveur 4.

Le système 2 comporte également une multitude de terminaux permettant de lire sur un écran le livre numérique 12. Pour simplifier la figure 1, seul un terminal 20 est représenté. Le terminal 20 est équipé d'un écran électronique 22 permettant d'afficher de manière directement visible et compréhensible par un être humain le livre numérique 12. Par exemple, l'écran 22 est un écran tactile.

Le terminal 20 comporte également une unité centrale 24 pour commander et gérer l'affichage du livre numérique sur l'écran 22. Cette unité centrale 24 comporte un calculateur électronique 26 programmable apte à exécuter des instructions enregistrées sur un support d'enregistrement d'informations. A cet effet, le calculateur 26 est raccordé à une mémoire 28 contenant les instructions nécessaires pour afficher le livre numérique sur l'écran 22. Ici, la mémoire 28 comporte également une copie du livre numérique 12.

Plus précisément, pour afficher le livre numérique 12 sur l'écran 22, la mémoire 28 comprend les instructions d'une liseuse 30. La liseuse 30 est un logiciel capable d'afficher des livres numériques sur l'écran 22 indépendamment du fait que ceux-ci aient été ou non au préalable tatoués. Ici, la liseuse 30 est un logiciel conventionnel capable de lire des livres dans différents formats tels que l'un des formats suivants : e-pub, PDF, ASCM ou AZW. Par exemple, la liseuse 30 est l'une des liseuses connues sous les noms commerciaux de « Acrobat Reader® » ou « Amazon Kindle® » ou autre.

Ici, la distribution du livre numérique 12 entre le serveur 4 et le terminal 20 se fait par l'intermédiaire d'un réseau 34 de transmission d'informations. Par exemple, le réseau 34 est la toile d'araignée mondiale plus connue sous le terme anglais de « World Wide Web » ou sous le terme de « Internet ».

Dans ce mode de réalisation, chaque livre numérique contient un texte codé et une police de caractères pour afficher ce texte codé.

Un texte codé est une succession de codes numériques. Ici, le texte du livre numérique 10 est codé en utilisant à cet effet la norme Unicode. Cette norme définit notamment quel est le code associé à chaque caractère. Dans la suite de cette description et dans les dessins, à défaut d'indication contraire, les valeurs des codes de caractères sont données en Hexadécimal.

La police associe à chaque code du texte codé un glyphe. A cet effet, elle comporte autant de paires code-glyphe qu'il y a de glyphes affichables sur un écran en utilisant cette police. Une paire code-glyphe est formée d'un code du texte codé et d'une référence à une suite d'instructions exécutable par la liseuse 30 pour afficher sur l'écran un glyphe. Ainsi, chaque paire code-glyphe associe de façon unique un code à un glyphe. Les instructions peuvent comporter une image matricielle du glyphe telle qu'une photo, ou un groupe d'équations définissant de façon vectorielle la forme graphique du glyphe.

Pour illustrer les différents procédés de tatouage décrits dans la suite de la description, le fonctionnement de ces procédés est illustré dans le cas particulièrement simple où le livre numérique 10 comporte un texte 40 (figure 2), constitué d'une seule phrase : « Hello world ! lord of worms ! ». La police du livre numérique 10 est la police 42 dont seule une partie est représentée sur la figure 3. Par exemple, la police 42 est la police connue sous le nom de «Arial».

Dans la figure 2, chaque glyphe du texte 40 est représenté dans une cellule respective d'une même ligne d'un tableau. Le texte codé 44 correspondant au texte 40 est représenté dans une ligne juste en dessous du texte 40. Dans cette ligne, chaque code d'un glyphe se trouve à l'intérieur d'une cellule située juste en dessous de la cellule contenant ce glyphe. La succession des codes dans le tableau de la figure 2 forme le texte codé 44.

Sur la figure 3, seuls les glyphes utilisés pour afficher le texte 40 sont représentés dans des cellules respectives d'une ligne 46 d'un tableau. Le code associé par la police 42 à chaque glyphe est contenu à l'intérieur d'une cellule respective située juste en dessous de la cellule contenant le glyphe correspondant. Il s'agit des cellules d'une ligne 48. Dans la figure 3, chaque colonne forme donc une paire code-glyphe de la police 42.

La figure 4 représente un procédé de tatouage de l'identifiant Id₁ dans le livre 10. Ce procédé va maintenant être décrit dans le cas particulier du livre 10 décrit en référence aux figures 2 et 3.

Le procédé débute par une étape 54 d'identification de la police préexistante utilisée pour l'affichage du livre 10. La police préexistante contient tous les codesque l'on retrouve dans le texte codé 44. Par conséquent, si nécessaire, lors de cette étape 54, les glyphes et codes non utilisés dans le texte codé 44 sont éliminés de la police originale pour obtenir la police préexistante.

Dans le cas particulier décrit ici, la police préexistante est identique à la police 42 représentée sur la figure 3. Par conséquent, la police préexistante est également désignée dans cette description par la référence numérique 42.

Ensuite, lors d'une étape 56, le calculateur 6 élabore, en fonction de la valeur de l'identifiant Id₁, une nouvelle police à partir de la police préexistante 42. Pour chaque valeur différente de l'identifiant Id₁, la nouvelle police est différente. Par conséquent, la nouvelle police est associée par une relation biunivoque à la valeur de l'identifiant Id₁. La nouvelle police diffère de la police préexistante par le fait qu'elle comporte au moins une nouvelle paire code-glyphe différente des paires code-glyphe existantes dans la police préexistante. Typiquement, cette nouvelle paire code-glyphe se distingue des paires code-glyphe existantes par au moins l'une des différences suivantes:
- le glyphe est un nouveau glyphe qui n'existe pas dans la police préexistante, et/ou
- le code est un nouveau code qui n'existe pas dans la police préexistante, et/ou
- le code est associé à un glyphe différent existant dans la police préexistante.

Ici, la nouvelle police est élaborée en remplaçant dans la police préexistante des paires code-glyphe préexistantes par de nouvelles paires code-glyphe ou en ajoutant aux paires code-glyphe préexistantes de nouvelles paires code-glyphes. Les nouvelles paires code-glyphe permettent d'afficher des caractères graphiquement identiques aux caractères que permettent d'afficher les paires code-glyphe préexistantes. La fonction qui crée la nouvelle police à partir de la police préexistante est notée par la suite E_{Id}. Cette fonction E_{Id} est une fonction paramétrée. Dans ces mode de réalisation, le paramètre est la valeur de l'identifiant Id₁. La fonction E_{Id} est une fonction biunivoque entre la valeur de l'identifiant Id₁ et la nouvelle police élaborée.

Lord d'une étape 58, le calculateur 6 élabore un nouveau texte codé à partir du texte préexistant codé 44.

Comme précédemment indiqué, la nouvelle police permet l'affichage de caractères graphiquement identiques à ceux affichés en utilisant la police préexistante. Toutefois, pour cela, la nouvelle police permet d'utiliser la nouvelle paire code-glyphe. Ainsi, pour afficher au moins un caractère graphiquement identique à celui affiché au moyen de la police préexistante, on utilise un ou plusieurs codes différents de ceux utilisés avec la police préexistante 42. Ce ou ces codes utilisés de la nouvelle police sont appelés les « nouveaux codes ». Le ou les codes utilisés de la police préexistante 42 pour afficher les caractères graphiquement identiques, sont appelés les « anciens codes ». Avec ces appellations, l'étape 58 consiste à remplacer, dans le texte codé 44, au moins une occurrence des anciens codes par des nouveaux codes de la nouvelle police. Cette modification du texte codé 44 est réalisée de manière à ce que le nouveau texte codé affiché à l'aide de la nouvelle police soit graphiquement identique, lorsqu'il est affiché sur un écran quelconque, au texte préexistant affiché avec la police préexistante sur le même écran.

On remarquera que puisque la nouvelle police est unique pour chaque valeur de l'identifiant Id₁, et puisque le nouveau texte codé est également unique pour chaque valeur de l'identifiant Id₁, ce procédé associe de façon indissociable le nouveau texte et la nouvelle police. En effet, il n'est pas possible d'afficher correctement le nouveau texte à l'écran en utilisant une autre police que la nouvelle police.

Éventuellement, lors d'une étape 60, le calculateur 6 génère une empreinte numérique de la nouvelle police. L'empreinte numérique est un condensé de la nouvelle police. Ce condensé permet d'identifier de façon unique la nouvelle police. Typiquement, l'empreinte numérique est créée en appliquant une fonction de hachage sur la nouvelle police. L'empreinte numérique occupe moins de place en mémoire que la nouvelle police complète.

Si l'opération 60 est réalisée, alors lors d'une opération 62, le calculateur 6 enregistre l'empreinte numérique générée dans la base de données 14 et l'associe à la valeur de l'identifiant Id₁ qui a été utilisée pour élaborer la nouvelle police.

Les étapes 60 et 62 sont représentées en pointillées car elles peuvent être omises. Par exemple, ces étapes sont omises s'il est possible de retrouver la valeur de l'identifiant Id₁ à partir de la nouvelle police et de la connaissance de la fonction E_{id} et de la police préexistante. L'étape 60 peut aussi être omise tout en conservant l'étape 62. Dans ce cas, c'est la nouvelle police complète qui est enregistrée dans la base 14 associée à la valeur de l'identifiant Id₁ utilisée pour l'élaborer.

Lors d'une étape 64, le nouveau livre 12, contenant la nouvelle police et le nouveau texte codé élaborés lors des étapes précédentes, est fourni au terminal 20 via le réseau 34.

Enfin, lors d'une étape 66, la liseuse 30 affiche sur l'écran 22 le texte codé du livre numérique 12. Ici, le texte codé affiché du livre numérique 12 est identique d'un point de vue graphique, lorsqu'il est affiché sur l'écran 22, à celui du livre numérique 10.

Si une copie illicite du livre numérique 12 est retrouvée sur un réseau de partage de fichiers, alors l'acheteur qui a mis à disposition cette copie sur le réseau est identifié à l'aide d'un procédé de décodage de l'identifiant Id₁ encodé par le procédé de la figure 4 dans ce livre numérique. La figure 5 représente un tel procédé de décodage.Lors d'une étape 70 le calculateur 6 génère l'empreinte numérique de la police de la copie illicite du livre. Pour cela, il utilise le même algorithme que celui mis en oeuvre lors de l'étape 60.

Ensuite, lors d'une étape 72, le calculateur 6 recherche dans la base 14 la valeur de l'identifiant Id₁ associée à l'empreinte numérique générée. Ainsi, à l'issue de l'étape 72, la valeur de l'identifiant Id₁ encodé dans la copie illicite du livre numérique est révélée. Cela permet donc d'identifier l'acheteur qui a distribué illicitement sa copie du livre numérique 12.

La figure 6 représente un autre mode de réalisation du procédé de décodage. Lors d'une opération 74, le calculateur 6 compare la police de la copie illicite du livre à la police préexistante pour identifier les différences. La police préexistante est par exemple obtenue à partir du livre 10. Puis à partir de ces différences et à l'aide de la connaissance de la fonction E_{Id} utilisée, il retrouve la valeur de l'identifiant Id₁. Des exemples de mise en oeuvre de cette étape 74 sont donnés plus loin. Lorsque le procédé de la figure 6 est mis en oeuvre, la base 14 peut être omise.

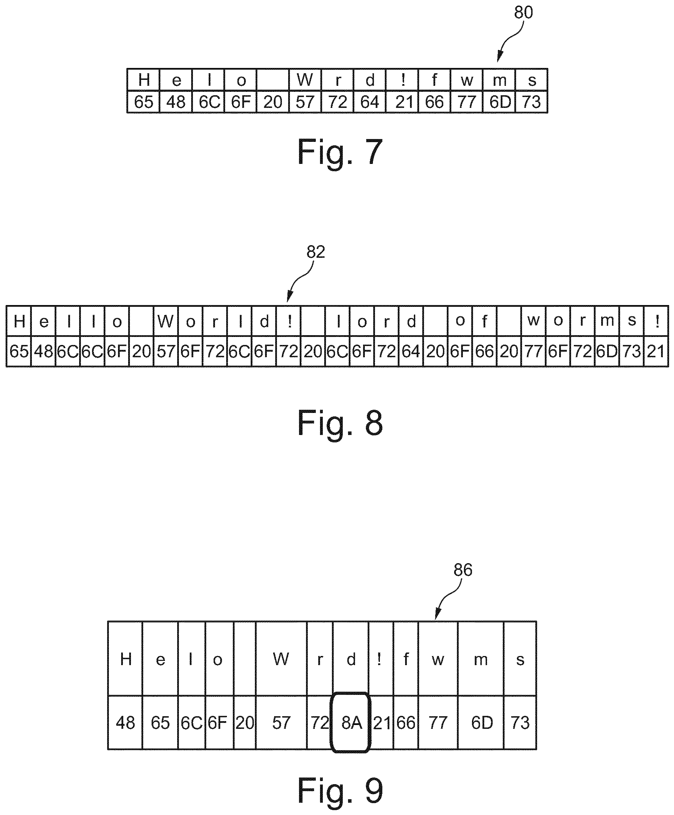

Différentes méthodes pour élaborer la nouvelle police vont maintenant être décrites en référence aux figures 7 à 17.

Une première méthode consiste à permuter, à l'aide d'une fonction bijective E_{Id}, paramétrée par la valeur de l'identifiant Id₁, les différents codes présents dans la ligne 48 de la police préexistante 42. Il existe un très grand nombre de permutations possibles pouvant convenir telles que les permutations circulaires. Ici, ce mode de réalisation est illustré sur un exemple simplifié où la fonction E_{Id} permute un premier et un second codes de la police 42 de manière à créer deux nouvelles paires code-glyphe. Les deux codes permutés sont choisis en fonction de la valeur de l'identifiant Id₁. Par exemple, un tableau préenregistré associe à chaque valeur possible de l'identifiant Id₁ un premier et un second codes à permuter de la police 42. Par exemple, les premières lignes de ce tableau peuvent être les suivantes :

| Valeur de l'identifiant Id₁ | 1^{er} Code | 2eme Code |
|---|---|---|
| 1 | 48 | 65 |
| 2 | 48 | 6C |
| 3 | 48 | 6F |
| 4 | 48 | 20 |
| 5 | 48 | 57 |
| 6 | 65 | 77 |
| 8 | 20 | 73 |

Ainsi, dans le cas particulier où la valeur de l'identifiant Id1 est égale à « 1 », la fonction E_{Id} permute les codes 48 et 65 de la police 42 pour obtenir la nouvelle police 80 représentée sur la figure 7. Dans cette police, les codes des glyphes « H » et « e » ont été permutés.

Le nouveau texte codé élaboré à partir de la police 80 est le texte codé 82 représenté dans le tableau de la figure 8.

On remarquera que si une telle fonction E_{Id} est mise en oeuvre, il n'est pas nécessaire de mettre en oeuvre les étapes 60 et 62 pour retrouver la valeur de l'identifiant Id₁ à partir d'une copie du livre numérique tatoué. En effet, lors de l'étape 74, en comparant la police 80 à la police 42, il est possible d'identifier les codes qui ont été permutés. Ensuite, à l'aide du tableau ci-dessus, il est possible de retrouver la valeur de l'identifiant Id₁.

Une deuxième méthode pour élaborer une nouvelle police 86 (figure 9) consiste à remplacer un ou plusieurs codes de la police préexistante par de nouveaux codes et créer ainsi de nouvelles paires code-glyphe. Ici, la nouvelle police 86 est élaborée en remplaçant l'ancien code associé au glyphe « d » par un nouveau code dont la valeur est fonction de la valeur de l'identifiant Id₁. Par exemple, la valeur du nouveau code est prise égale à la valeur de l'identifiant Id₁ auquel on ajoute le nombre hexadécimal 0x80. Ce nouveau code est entouré d'une ligne en gras dans la figure 9. Le nombre 0x80 permet de garantir que la somme de ce nombre avec la valeur de l'identifiant Id₁ n'est jamais égale à un autre code de la police 42, car dans l'exemple tous les codes de la police 42 sont inférieurs à ce nombre hexadécimal 0x80.

Comme pour la première méthode, la fonction E_{Id} est telle qu'il est possible de retrouver la valeur de l'identifiant Id₁ en comparant les polices 42 et 86, et en connaissant la fonction E_{Id} utilisée pour élaborer la police 86.

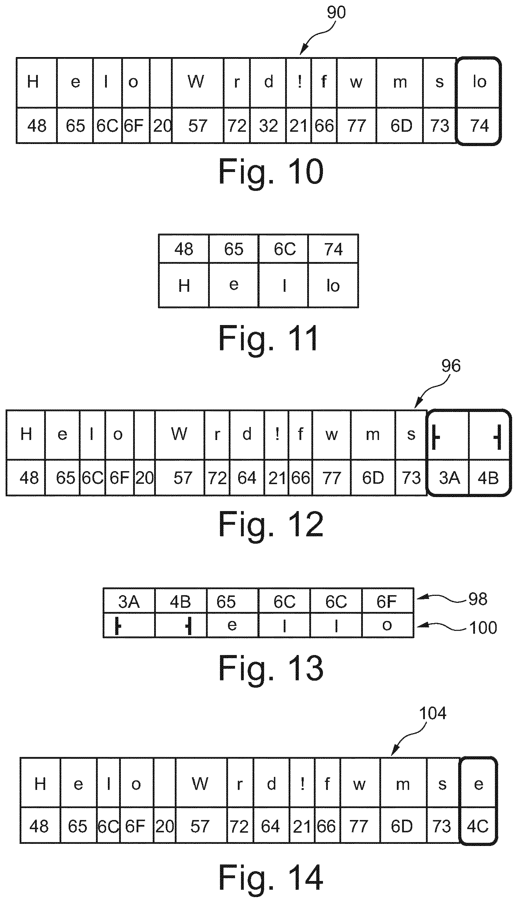

La figure 10 illustre une nouvelle police 90 obtenue en mettant en oeuvre une troisième méthode d'élaboration d'une nouvelle police. La troisième méthode consiste à générer un nouveau glyphe et à l'ajouter à la police préexistante pour obtenir une nouvelle paire code-glyphe. Le nouveau glyphe est ici une concaténation de plusieurs glyphes de la police préexistante 42. Cette concaténation doit apparaître à l'écran lorsque le livre numérique 10 est affiché. Par exemple, dans la police 90, le nouveau glyphe « lo » est la concaténation des glyphes « l » et « o » de la police préexistante 42. Un nouveau code, ici le code « 0x74 », différent des codes existants de la police 42 est associé à ce nouveau glyphe « lo ». La valeur du nouveau code et/ou le nouveau glyphe sont construits en fonction de la valeur de l'identifiant Id₁. Par exemple, les glyphes de la police préexistante 42 à concaténer pour créer le nouveau glyphe sont choisis en fonction de la valeur de l'identifiant Id₁. Dans ce cas, la valeur du code de ce nouveau glyphe peut être indépendante de la valeur de l'identifiant Id₁. Une autre possibilité consiste à choisir les glyphes à concaténer de la police 42 indépendamment de la valeur de l'identifiant Id₁ puis à affecter un code au nouveau glyphe ainsi construit, fonction de la valeur de l'identifiant Id₁.

Ensuite, lors de l'étape 58, pour au moins une occurrence de la succession des codes correspondants aux glyphes « l » et « o » dans le texte codé 44, cette succession de codes est remplacée par le nouveau code « 0x74 » comme illustré dans le tableau de la figure 11. Dans ce tableau, la première ligne représente le texte codé et la seconde ligne montre le glyphe associé à chaque code de la cellule immédiatement au-dessus.

La figure 12 représente une nouvelle police 96 élaborée selon une quatrième méthode. Comme précédemment, la quatrième méthode consiste à ajouter des nouveaux glyphes à la police préexistante 42 pour créer de nouvelle paires code-glyphe. Le nouveau glyphe créé est ici créé en découpant un glyphe de la police 42, ici le glyphe « H », en plusieurs morceaux. Dans la nouvelle police 96, le glyphe « H » a été divisé verticalement en deux glyphes symétriques l'un de l'autre par rapport à un axe de symétrie vertical. Les morceaux correspondant aux parties gauche et droite du « H » sont associés, respectivement, aux codes 0x3A et « 0x4B » dans la nouvelle police 96. Le glyphe « H » en un seul morceau peut être supprimé pour forcer l'utilisation des glyphes associés aux codes 0x3A et 0x4B.

La valeur de l'identifiant est utilisée dans cette quatrième méthode pour réaliser une ou plusieurs des tâches suivantes :
- sélectionner le glyphe de la police préexistante à découper en plusieurs morceaux, et/ou
- sélectionner la façon de découper le glyphe de la police préexistante, et/ou
- générer les valeurs des codes associés dans la nouvelle police 96 à chaque morceau du glyphe créé.

Un exemple d'une façon de découper le glyphe paramétrée par la valeur de l'identifiant Id₁ est le suivant : selon la valeur de l'identifiant Id₁, les axes le long desquels est découpée la lettre H ne sont pas les mêmes.

La figure 13 représente le texte « Hello » codé avec la police 96. Le texte codé se trouve dans la ligne 98 et les glyphes associés à chaque code se trouvent dans la ligne 100.

Le nouveau texte codé est élaboré en remplaçant au moins une occurrence du code 48 par la succession de codes 0x3A et 0x4B.

Lorsqu'un ou plusieurs nouveaux glyphes sont ajoutés à la police préexistante, cela permet d'obtenir une nouvelle police dans laquelle les glyphes sont redondants. Par exemple, dans la police 96, le glyphe dont le code est 0x48 est redondant avec la succession des glyphes de code 0x3A et 0x4B. Cette redondance peut être mise à profit pour encoder une information complémentaire. Typiquement, l'information complémentaire est différente de la valeur de l'identifiant Id₁. Par exemple, l'information complémentaire peut être un identifiant du revendeur ou du distributeur du livre numérique. Toutefois, si l'on souhaite encoder la valeur de l'identifiant Id₁ dans le même livre numérique de deux façons différentes, l'information complémentaire peut être prise égale à la valeur de l'identifiant Id₁.

Par exemple, la première occurrence d'un « H » dans le texte est remplacée par les codes 0x3A et 0x4B uniquement si le premier bit de cette information complémentaire est égal à « 1 ». Ensuite, la deuxième occurrence d'un « H » dans le texte est remplacée par les codes 0x3A et 0x4B uniquement si le deuxième bit de cette information complémentaire est égal « 1 », et ainsi de suite. On suppose dans cet exemple, que l'information complémentaire à encoder est différente de zéro de sorte que le nouveau texte codé soit différent de l'ancien.

La figure 14 représente une nouvelle police 104 élaborée selon une cinquième méthode. La cinquième méthode consiste à dupliquer un glyphe de la police 42 et à l'associer à un nouveau code pour obtenir une nouvelle paire code-glyphe. Ici, le glyphe dupliqué est le glyphe « e ». Le choix du glyphe dupliqué et/ou la valeur du nouveau code de ce glyphe dupliqué sont fonction de la valeur de l'identifiant Id₁. La redondance ainsi introduite dans la nouvelle police 104 peut être mise à profit pour coder, par exemple, comme décrit ci-dessus, une information complémentaire.

Les quatrièmes et cinquièmes méthodes ont été utilisées pour illustrer le fait qu'une redondance dans la nouvelle police pouvait être exploitée pour encoder une information complémentaire dans le texte codé. L'information complémentaire est encodée dans le texte codé car une modification de la valeur de l'information complémentaire entraîne seulement une modification du texte codé et non pas une modification de la nouvelle police.

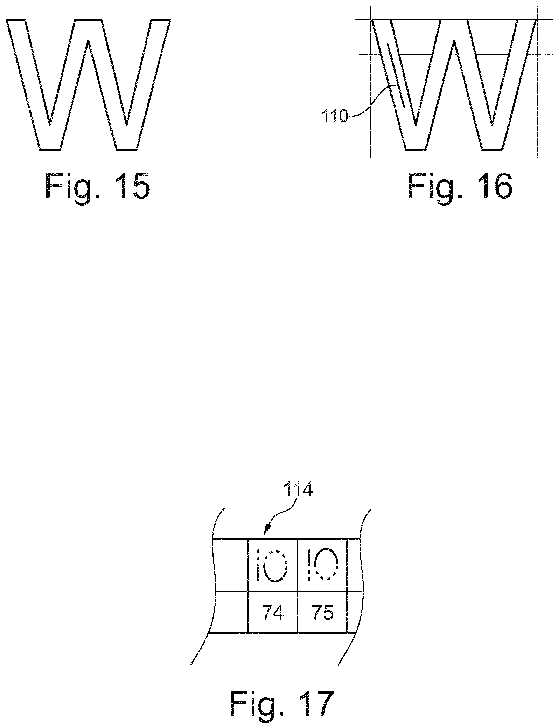

En plus de l'identifiant Id₁, il est également possible d'encoder une information complémentaire dans les glyphes de la nouvelle police. Par exemple, on suppose que la police préexistante est une police vectorielle dans laquelle chaque glyphe est défini par des équations de courbes. Typiquement, il s'agit de courbes de Bézier. Dans ce cas, l'information complémentaire peut être codée en modifiant les équations qui définissent un glyphe sans pour autant que cette modification soit perceptible lorsque le glyphe est affiché sur un écran. Par exemple, la figure 15 représente le glyphe « W » défini par un jeu d'équations dans la police préexistante 42. La figure 16 représente le même glyphe « W » défini par un nouveau jeu d'équations dans la nouvelle police élaborée selon cette méthode. Le nouveau jeu d'équations est identique à celui de la police préexistante, sauf qu'il comporte une équation supplémentaire définissant un trait 110 (figure 16). Le trait 110 est entièrement reçu à l'intérieur de l'épaisseur de la lettre « W » de la police 42. De plus, le trait 110 est de la même couleur que la lettre « W » de la police 42. Ainsi, sur un écran, le trait 110 est imperceptible. Par contre, le jeu d'équations du glyphe « W » dans la nouvelle police est différent du jeu d'équations définissant ce même glyphe dans la police préexistante. La présence ou l'absence du trait 110 est alors utilisée pour coder une information complémentaire. Par exemple, le codage de l'information complémentaire est réalisé en utilisant un trait 110 dont la longueur est différente pour chaque valeur différente de l'information complémentaire à encoder. Dans ce cas l'information complémentaire est uniquement encodée dans les glyphes car une modification de la valeur de l'information complémentaire entraîne seulement une modification d'un ou plusieurs glyphes de la nouvelle police.

Les différentes méthodes décrites précédemment pour élaborer une nouvelle police peuvent être combinées les unes avec les autres de manière à obtenir une fonction E_{Id} plus complexe.

Par exemple, les méthodes décrites en référence aux figures 10 et 12 sont combinées pour ajouter des glyphes à la police qui sont des concaténations de différents morceaux de différents glyphes de la police préexistante. Par exemple, la figure 17 représente un extrait d'une nouvelle police 114. Cette nouvelle police 114 a été élaborée à partir de la police 42 en appliquant successivement les troisième et quatrième méthodes. L'application de la troisième méthode conduit à créer un glyphe intermédiaire « lo ». Ensuite, la quatrième méthode a été appliquée à ce glyphe intermédiaire « lo » pour le scinder en deux selon un axe horizontal, et obtenir ainsi deux nouveaux glyphes correspondant aux codes 0x74 et 0x75 dans la nouvelle police 114. Sur la figure 17, les morceaux manquants pour reconstituer le glyphe « lo » complet sont représentés en pointillés. Dans le nouveau texte codé, les codes correspondants à la succession des glyphes « l » et « o » sont remplacés par les codes 0x74 et 0x75.

De nombreux autres modes de réalisation sont possibles. Par exemple, l'ordre des étapes 56 et 58 peut être inversé dans certains modes de réalisation. Ainsi, l'encodage de l'identifiant dans le texte original peut être réalisé avant l'élaboration de la nouvelle police. Ainsi, en variante, on permute d'abord, en fonction de la valeur de l'identifiant Id₁, les codes des caractères dans le texte codé 44, puis on réalise la même permutation dans les codes de la police 42 pour élaborer la nouvelle police.

De nombreux autres modes de réalisation existent pour élaborer une nouvelle police et un nouveau texte unique en fonction de la valeur de l'identifiant Id₁. Par exemple, dans la seconde méthode d'élaboration, le glyphe dont le code est modifié, peut être sélectionné en fonction de la valeur de l'identifiant Id₁. Par exemple, une partie des bits de la valeur de l'identifiant Id₁ est utilisée pour sélectionner le glyphe de la police préexistante dont le code va être modifié, et une autre partie des bits de ce même identifiant Id₁ est utilisée pour générer le nouveau code qui remplace l'ancien code. Dans un autre mode de réalisation, la valeur du nouveau code est indépendante de la valeur de l'identifiant, et seul le glyphe sélectionné est fonction de la valeur de l'identifiant Id₁.

D'autres méthodes de création de nouveaux glyphes sont possibles. Par exemple, il est possible de créer un nouveau glyphe qui résulte de la concaténation d'un glyphe complet de la police préexistante avec un morceau seulement d'un glyphe de cette même police préexistante.

Dans une autre variante, le nouveau glyphe créé est fonction de la valeur de l'identifiant Id₁. Par exemple, la fonction de découpage d'un glyphe de la police préexistante en plusieurs glyphes est paramétrée avec la valeur de l'identifiant Id₁.

Un nouveau glyphe peut également être créé en concaténant plusieurs glyphes ou des portions de glyphes de la police préexistante, mais défini avec un codage vectoriel différent du codage vectoriel de ces mêmes morceaux de glyphes dans la police préexistante. Ceci ne modifie donc pas l'affichage de ces morceaux de glyphes à l'écran.

D'autres normes de codage de caractères que la norme Unicode, peuvent être utilisées. Par exemple, la norme ASCII peut être utilisée.

La police n'est pas nécessairement incorporée dans le livre numérique. Par exemple, le livre numérique contient uniquement le texte codé et une référence à une police qui doit être installée sur le terminal de lecture avant que le texte puisse être affiché. Dans ce mode de réalisation, la police et le texte du livre numérique tatoué ne sont pas nécessairement distribués en même temps. Par exemple, la police élaborée à partir de l'identifiant Id₁ est d'abord élaborée puis transmise au lecteur. Ensuite, chaque texte acheté est tatoué avec le même identifiant Id₁ de l'acheteur, puis transmis au lecteur. Toutefois, à chaque tatouage d'un nouveau livre numérique pour le même acheteur, il n'est pas nécessaire de procéder à nouveau à l'élaboration de la nouvelle police puisque ce dernier possède déjà une copie de cette nouvelle police. Dans ce mode de réalisation, de préférence, l'étape 54 est omise de manière à ce que la police transmise au terminal 20 puisse être utilisée avec un très grand nombre de livres numériques différents.

L'identifiant Id₁ encodé dans le livre numérique peut avoir différentes utilisations. Par exemple, il peut servir à identifier de façon unique l'éditeur du livre numérique ou à identifier le livre numérique lui-même. Par exemple, l'identifiant id₁ identifie le distributeur du livre numérique et une information complémentaire encodée par ce distributeur identifie l'acheteur.

La police préexistante n'est pas nécessairement la police du livre numérique original mais seulement la police à partir de laquelle la nouvelle police est élaborée. Par exemple, le procédé de tatouage précédemment décrit peut être mis en oeuvre une première fois pour tatouer dans une copie du livre numérique original un identifiant Id_{R} d'un revendeur. Ensuite, à chaque fois que le revendeur vend le livre numérique à un acheteur, il met aussi en oeuvre le procédé de la figure 4 pour tatouer la copie du livre numérique avec un identifiant Id₁ de l'acheteur. Pour le tatouage à l'aide de l'identifiant Id₁ la police préexistante est la police élaborée pour le revendeur, et non pas la police d'origine.

En variante, ce n'est pas la nouvelle police ou l'empreinte numérique de la nouvelle police qui est associée à la valeur de l'identifiant Id₁ dans la base de données 14 mais le nouveau texte ou une empreinte numérique de ce nouveau texte. En effet, comme la nouvelle police, le nouveau texte est relié à la valeur de l'identifiant Id₁ par une relation biunivoque. L'empreinte numérique enregistrée dans la base de données 14 peut aussi être générée à la fois à partir de la nouvelle police et du nouveau texte.

Lorsqu'un la nouvelle paire code-glyphe de la nouvelle police comporte un nouveau glyphe, l'empreinte numérique de la nouvelle police peut être générée en construisant un condensé uniquement à partir de l'ensemble des éléments graphiques des glyphes de la nouvelle police sans prendre en compte les codes associés à ces derniers. Chaque glyphe étant graphiquement codé par une série numérique de valeurs (simple matrice de points, ou coordonnées vectorielles), ce condensé peut être obtenu par application d'une fonction de hachage sur l'ensemble des séries numériques triées. La fonction de hachage est préférentiellement cryptographique telle MD5 ou, en alternative, est une somme de contrôle telle CRC64. Dans ce mode de réalisation, l'empreinte numérique associée à la valeur de l'identifiant Id₁ comporte la valeur du condensé obtenu et une éventuelle clé si la fonction de hachage est cryptographique. Cela permet de rendre le procédé de tatouage encore plus robuste vis-à-vis de modifications telles des permutations de code entre les glyphes visant à rendre la reconnaissance de l'identifiant Id₁ impossible. En alternative, le condensé est une représentation codée de la séquence de modifications mises en oeuvre pour passer de la police préexistante à la nouvelle police.

Le décodage de la valeur de l'identifiant Id₁ encodé dans un livre numérique n'est pas nécessairement réalisé sur la même machine que celle utilisée pour tatouer ce livre.

Dans d'autres modes de réalisation, ce n'est pas l'identifiant Id₁ qui est directement encodé dans le livre numérique mais la valeur d'un paramètre P₁. La valeur du paramètre P₁ encodée dans le livre numérique est alors reliée par une fonction biunivoque différente de l'identité à la valeur de l'identifiant Id₁. Par exemple, chaque valeur différente du paramètre P₁ est associée, dans une base de données, à une valeur respective de l'identifiant Id₁. Dans ce cas, il est possible de construire d'abord les nouvelles polices correspondant aux différentes valeurs possibles du paramètres P₁ sans connaître à ce moment là les valeurs des identifiants Id₁ associées à chacune des valeurs du paramètre P₁. Puis, après l'élaboration des nouvelles polices, d'associer chaque nouvelle police à la valeur d'un identifiant Id₁. Par exemple, la base de données 14 est uniquement construite à ce moment là.

La méthode décrite en référence aux figures 15 et 16 pour encoder une information complémentaire dans les équations définissant un glyphe peut être mise en oeuvre indépendamment des méthodes décrites pour encoder l'identifiant Id₁ ou le paramètre P₁.

## Revendications

1. Procédé de tatouage de livres numériques avec des paramètres reliés par une fonction biunivoque à des identifiants respectifs, le livre numérique contenant un texte préexistant codé dans lequel chaque caractère est codé par au moins un code et une police préexistante de caractères ou une référence à une police préexistante de caractères, chaque police de caractères comportant des paires code-glyphe, chaque paire code-glyphe associant un code du texte codé à un glyphe utilisé pour afficher un caractère, **caractérisé en ce que** ce procédé comporte des étapes :
- d'élaboration (56) pour chaque paramètre d'une nouvelle police de caractères à partir de la police préexistante, en créant au moins une nouvelle paire code-glyphe différente des paires code-glyphe existantes dans la police préexistante, cette nouvelle paire code-glyphe se distinguant des paires code-glyphe existantes par au moins l'une des différences suivantes:
• le glyphe est un nouveau glyphe qui n'existe pas dans la police préexistante, ou
• le code est un nouveau code qui n'existe pas dans la police préexistante, ou
• le code est associé à un glyphe différent existant dans la police préexistante,
le nouveau glyphe ou le nouveau code ou la nouvelle association code-glyphe étant fonction de la valeur du paramètre de sorte que la nouvelle police est différente pour chaque valeur différente de l'identifiant,
- d'élaboration (58) d'un nouveau texte codé à partir du texte préexistant codé en remplaçant dans le texte préexistant codé au moins un code ou groupe de codes de la police préexistante permettant d'afficher un caractère ou une combinaison de caractères du livre numérique par le code ou le groupe de codes de la nouvelle police permettant d'afficher le caractère ou la combinaison de caractères graphiquement identique sur un écran quelconque, ce code ou ce groupe de codes de la nouvelle police comportant au moins le code de la nouvelle paire code-glyphe de sorte que le nouveau texte codé ainsi élaboré est différent pour chaque valeur différente de l'identifiant,
- de fourniture (64) en tant que livre numérique tatoué du nouveau texte codé et de la nouvelle police ou d'une référence à la nouvelle police.

2. Procédé selon la revendication 1, dans lequel l'élaboration (56) de la nouvelle police comporte le remplacement d'un code associé à un glyphe dans la police préexistante par un autre code différent pour créer une nouvelle paire code-glyphe, la valeur de l'autre code et/ou le choix du glyphe de la police préexistante dont le code est remplacé étant fonction de la valeur du paramètre.

3. Procédé selon la revendication 2, dans lequel le remplacement d'un code de la police préexistante par un autre code pour élaborer la nouvelle police comprend la permutation de plusieurs des codes de la police préexistante de manière à créer les nouvelles paires code-glyphe permettant d'afficher les mêmes glyphes que la police préexistante, la permutation utilisée étant fonction de la valeur du paramètre.

4. Procédé selon l'une quelconque des revendications précédentes, dans lequel l'élaboration (56) de la nouvelle police comprend :
- la création d'un nouveau glyphe identique, lorsqu'il est affiché sur un écran quelconque, à la concaténation de plusieurs glyphes de la police préexistante, et
- l'association d'un code à ce nouveau glyphe, le nouveau glyphe créé et/ou la valeur du code de ce nouveau glyphe étant fonction de la valeur du paramètre.

5. Procédé selon l'une quelconque des revendications précédentes, dans lequel l'élaboration (56) de la nouvelle police comporte :
- la création de plusieurs nouveaux glyphes, chacun de ces nouveaux glyphes comportant au moins un morceau seulement d'un même glyphe de la police préexistante de manière à ce que la superposition de ces nouveaux glyphes constitue un glyphe identique, lorsqu'elle est affichée sur un écran quelconque, à ce glyphe de la police préexistante,
- l'association d'un code à chacun de ces nouveaux glyphes, le nouveau glyphe créé et/ou la valeur du code de ce nouveau glyphe étant fonction de la valeur du paramètre.

6. Procédé selon l'une quelconque des revendications précédentes, dans lequel l'élaboration de la nouvelle police comprend la création d'un glyphe identique, lorsqu'il est affiché sur un écran quelconque, à un glyphe ou à une combinaison de glyphes de la police préexistante mais défini par un codage vectoriel différent du codage vectoriel utilisé pour ce glyphe ou cette combinaison de glyphes dans la police préexistante, le codage vectoriel différent étant relié par une fonction biunivoque à la valeur d'une information complémentaire encodée dans le livre numérique tatoué.

7. Procédé selon l'une quelconque des revendications précédentes, dans lequel le procédé comporte l'enregistrement (62) dans une base de données de la valeur de l'identifiant relié par la fonction biunivoque à la valeur du paramètre utilisé pour élaborer la nouvelle police, associée à la nouvelle police ou au nouveau texte codé ou à une empreinte numérique de la nouvelle police ou à une empreinte numérique du nouveau texte.

8. Procédé selon l'une quelconque des revendications précédentes, dans lequel la valeur utilisée du paramètre est uniquement encodable en binaire sur plusieurs bits.

9. Programme d'ordinateur ou support d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

10. Dispositif (4) de tatouage de livres numériques avec des paramètres reliés par une fonction biunivoque à des identifiants respectifs, le livre numérique contenant un texte préexistant codé dans lequel chaque caractère est codé par au moins un code et une police préexistante de caractères ou une référence à une police préexistante de caractères, chaque police de caractères comportant des paires code-glyphe, chaque paire code-glyphe associant un code du texte codé à un glyphe utilisé pour afficher un caractère, ce dispositif comportant :
- un support d'enregistrement d'informations, et
- un calculateur électronique programmable, apte à exécuter des instructions enregistrées sur le support d'enregistrement d'informations,
**caractérisé en ce que** le support d'enregistrement d'informations comporte des instructions pour la mise en oeuvre d'un procédé conforme à l'une quelconque des revendications 1 à 8, lorsque ces instructions sont exécutées par le calculateur électronique.

11. Ensemble de livres numériques tatoués (12) obtenu en mettant en oeuvre un procédé conforme à l'une quelconque des revendications 1 à 8, chacun de ces livres numériques tatoués étant apte à afficher un texte, sur un écran quelconque, graphiquement identique au texte affiché par les autres livres numériques de cet ensemble lorsque ce livre est lu par une liseuse électronique, chaque livre numérique contenant à cet effet :
- un texte codé dans lequel chaque caractère est codé par au moins un code,
- une police de caractères ou une référence à une police de caractères utilisée pour afficher le texte codé sur un écran, chaque police de caractères comportant des paires code-glyphe, chaque paire code-glyphe associant un code du texte codé à un glyphe utilisé pour afficher un caractère,
**caractérisé en ce que** :
- la police de chaque livre numérique comporte au moins une paire code-glyphe différente se distinguant des paires code-glyphe existantes dans les polices des autres livres numériques de l'ensemble par au moins l'une des différences suivantes:
• le glyphe est un nouveau glyphe qui n'existe pas dans les polices des autres livres numériques de l'ensemble, ou
• le code est un nouveau code qui n'existe pas dans les polices des autres livres numériques de l'ensemble, ou
• le même code est associé à d'autres glyphes différents dans les polices des autres livres numériques de l'ensemble,
- le texte codé de chaque livre numérique comporte au moins le code de la paire code-glyphe différente de sa police, le texte ainsi codé étant différent des textes codés des autres livres numériques de l'ensemble.

## Patentansprüche

1. Verfahren zur Wasserzeichenmarkierung digitaler Bücher mit Parametern, die durch eine bijektive Funktion mit jeweiligen Identifikatoren verbunden sind, wobei das digitale Buch einen codierten vorbestehenden Text enthält, wobei jedes Zeichen durch mindestens einen Code und eine vorbestehende Schriftart oder eine Referenz auf eine vorbestehende Schriftart codiert ist, wobei jede Schriftart Paare von Code-Glyphe umfasst, wobei jedes Paar von Code-Glyphe einen Code des codierten Texts mit einer Glyphe assoziiert, die zum Anzeigen eines Zeichens verwendet wird, **dadurch gekennzeichnet, dass** das Verfahren die Schritte umfasst:
- Ausarbeiten (56), für jeden Parameter, einer neuen Schriftart aus der vorbestehenden Schriftart, indem mindestens ein neues Paar von Code-Glyphe erzeugt wird, das von den bestehenden Paaren von Code-Glyphe in der vorbestehenden Schriftart verschieden ist, wobei sich dieses neue Paar von Code-Glyphe von den bestehenden Paaren von Code-Glyphe durch mindestens einen der folgenden Unterschiede unterscheidet:
• die Glyphe ist eine neue Glyphe, die in der vorbestehenden Schriftart nicht existiert, oder
• der Code ist ein neuer Code, der in der vorbestehenden Schriftart nicht existiert, oder
• der Code ist mit einer anderen Glyphe assoziiert, die in der vorbestehenden Schriftart existiert,
wobei die neue Glyphe oder der neue Code oder die neue Assoziation von Code-Glyphe eine Funktion des Werts des Parameters ist, so dass die neue Schriftart für jeden unterschiedlichen Wert des Identifikators unterschiedlich ist,
- Ausarbeiten (58) eines neuen codierten Texts aus dem codierten vorbestehenden Text, indem in dem codierten vorbestehenden Text mindestens ein Code oder eine Gruppe von Codes der vorbestehenden Schriftart ersetzt wird, wodurch ein Zeichen oder eine Kombination von Zeichen des digitalen Buchs durch den Code oder die Gruppe von Codes der neuen Schriftart angezeigt werden kann, wodurch das Zeichen oder die Kombination von Zeichen, die graphisch identisch sind, auf irgendeinem Bildschirm angezeigt werden kann, wobei dieser Code oder diese Gruppe von Codes der neuen Schriftart mindestens den Code des neuen Paars von Code-Glyphe umfasst, so dass der so ausgearbeitete neue codierte Text für jeden unterschiedlichen Wert des Identifikators unterschiedlich ist,
- Liefern (64), als mit einer Wasserzeichenmarkierung versehenes digitales Buch, des neuen codierten Texts und der neuen Schriftart oder einer Referenz auf die neue Schriftart.

2. Verfahren nach Anspruch 1, wobei das Ausarbeiten (56) der neuen Schriftart das Ersetzen eines Codes umfasst, der mit einer Glyphe in der vorbestehenden Schriftart assoziiert ist, durch einen anderen unterschiedlichen Code, um ein neues Paar von Code-Glyphe zu erzeugen, wobei der Wert des anderen Codes und/oder die Wahl der Glyphe der vorbestehenden Schriftart, deren Code ersetzt wird, eine Funktion des Werts des Parameters ist.

3. Verfahren nach Anspruch 2, wobei das Ersetzen eines Codes der bestehenden Schriftart durch einen anderen Code, um die neue Schriftart auszuarbeiten, die Permutation mehrerer Codes der bestehenden Schriftart umfasst, um neue Paare von Code-Glyphe zu erzeugen, die ein Anzeigen derselben Glyphen wie die vorbestehende Schriftart gestatten, wobei die verwendete Permutation eine Funktion des Werts des Parameters ist.

4. Verfahren nach einem der vorhergehenden Ansprüche, wobei das Ausarbeiten (56) der neuen Schriftart umfasst:
- Erzeugen einer identischen neuen Glyphe, wenn sie auf irgendeinem Bildschirm angezeigt wird, mit der Verkettung von mehreren Glyphen der bestehenden Schriftart, und
- Assoziieren eines Codes mit dieser neuen Glyphe, wobei die erzeugte neue Glyphe und/oder der Wert des Codes dieser neuen Glyphe eine Funktion des Werts des Parameters ist/sind.

5. Verfahren nach einem der vorhergehenden Ansprüche, wobei das Ausarbeiten (56) der neuen Schriftart umfasst:
- Erzeugen mehrerer neuer Glyphen, wobei jede dieser neuen Glyphen mindestens ein Stück nur einer gleichen Glyphe der bestehenden Schriftart umfasst, so dass die Überlagerung dieser neuen Glyphen eine Glyphe darstellt, die, wenn sie auf irgendeinem Bildschirm angezeigt wird, mit dieser Glyphe der vorbestehenden Schriftart identisch ist,
- Assoziieren eines Codes mit jeder dieser neuen Glyphen, wobei die erzeugte neue Glyphe und/oder der Wert des Codes dieser neuen Glyphe eine Funktion des Werts des Parameters ist/sind.

6. Verfahren nach einem der vorhergehenden Ansprüche, wobei das Ausarbeiten der neuen Schriftart umfasst: Erzeugen einer Glyphe, die, wenn sie auf irgendeinem Bildschirm angezeigt wird, mit einer Glyphe oder einer Kombination von Glyphen der vorbestehenden Schriftart identisch ist, jedoch durch eine Vektorcodierung definiert wird, welche von der Vektorcodierung verschieden ist, die für diese Glyphe oder diese Kombination von Glyphen in der vorbestehenden Schriftart verwendet wird, wobei die verschiedene Vektorcodierung durch eine bijektive Funktion mit dem Wert einer komplementären Information verbunden ist, die in dem mit einer Wasserzeichenmarkierung versehenen digitalen Buch codiert ist.

7. Verfahren nach einem der vorhergehenden Ansprüche, wobei das Verfahren umfasst: Speichern (62), in einer Datenbank, des Werts des Identifikators, welcher durch die bijektive Funktion mit dem Wert des Parameters verbunden ist, der zum Ausarbeiten der neuen Schriftart verwendet wird, assoziiert mit der neuen Schriftart oder mit dem neuen codierten Text oder mit einem digitalen Abdruck der neuen Schriftart oder mit einem digitalen Abdruck des neuen Texts.

8. Verfahren nach einem der vorhergehenden Ansprüche, wobei der verwendete Wert des Parameters einzigartig binär in mehrere Bits codierbar ist.

9. Computerprogramm oder Informationsspeichermedium, **dadurch gekennzeichnet, dass** dieses Instruktionen zur Ausführung eines Verfahrens nach einem der vorhergehenden Ansprüche umfasst, wenn diese Instruktionen von einem elektronischen Rechner ausgeführt werden.

10. Vorrichtung (4) zur Wasserzeichenmarkierung digitaler Bücher mit Parametern, die durch eine bijektive Funktion mit jeweiligen Identifikatoren verbunden sind, wobei das digitale Buch einen codierten vorbestehenden Text enthält, wobei jedes Zeichen durch mindestens einen Code und eine vorbestehende Schriftart oder eine Referenz auf eine vorbestehende Schriftart codiert ist, wobei jede Schriftart Paare von Code-Glyphe umfasst, wobei jedes Paar von Code-Glyphe einen Code des codierten Texts mit einer Glyphe assoziiert, die zum Anzeigen eines Zeichens verwendet wird, wobei diese Vorrichtung umfasst:
- ein Informationsspeichermedium, und
- einen programmierbaren elektronischen Rechner, der geeignet ist, Instruktionen auszuführen, die auf dem Informationsspeichermedium gespeichert sind,
**dadurch gekennzeichnet, dass** das Informationsspeichermedium Instruktionen zur Durchführung eines Verfahrens nach einem der Ansprüche 1 bis 8 umfasst, wenn diese Instruktionen von dem elektronischen Rechner ausgeführt werden.

11. Einheit von mit einer Wasserzeichenmarkierung versehenen digitalen Büchern (12), welche durch die Durchführung eines Verfahrens nach einem der Ansprüche 1 bis 8 erhalten wird, wobei jedes dieser mit einer Wasserzeichenmarkierung versehenen digitalen Bücher geeignet ist, einen Text auf irgendeinem Bildschirm anzuzeigen, der grafisch identisch ist mit dem Text, der von den anderen digitalen Büchern dieser Einheit angezeigt wird, wenn dieses Buch von einem elektronischen Leser gelesen wird, wobei zu diesem Zweck jedes digitale Buch umfasst:
- einen codierten Text, in dem jedes Zeichen durch mindestens einen Code codiert ist,
- eine Schriftart oder eine Referenz auf eine Schriftart, die verwendet wird, um den codierten Text auf einem Bildschirm anzuzeigen, wobei jede Schriftart Paare von Code-Glyphe umfasst, wobei jedes Paar von Code-Glyphe einen Code des codierten Texts mit einer Glyphe assoziiert, die zum Anzeigen eines Zeichens verwendet wird,
**dadurch gekennzeichnet, dass**:
- die Schriftart jedes digitalen Buchs mindestens ein anderes Paar von Code-Glyphe umfasst, das sich von den existierenden Paaren von Code-Glyphe in den Schriftarten der anderen digitalen Bücher der Einheit durch mindestens einen der folgenden Unterschiede unterscheidet:
• die Glyphe ist eine neue Glyphe, die in den Schriftarten der anderen digitalen Bücher der Einheit nicht existiert, oder
• der Code ist ein neuer Code, der in den Schriftarten der anderen digitalen Bücher der Einheit nicht existiert, oder
• der Code ist mit anderen unterschiedlichen Glyphen in den Schriftarten der anderen digitalen Bücher der Einheit assoziiert,
- der codierte Text jedes digitalen Buchs mindestens den Code des Paars von Code-Glyphe umfasst, der von seiner Schriftart verschieden ist, wobei der so codierte Text von den codierten Texten der anderen digitalen Bücher der Einheit verschieden ist.

## Claims

1. Method for tattooing digital books with parameters linked by a bijective function to respective identifiers, the digital book containing a coded pre-existing text in which each character is coded by at least one code and a pre-existing typeface or a reference to a pre-existing typeface, each typeface having code/glyph pairs, each code/glyph pair associating a code from the coded text with a glyph used for displaying a character, **characterized in that** this method has the steps:
- of developing (56), for each parameter, a new typeface on the basis of the pre-existing typeface, by creating at least one new code/glyph pair that is different from the existing code/glyph pairs in the pre-existing typeface, this new code/glyph pair being distinguished from the existing code/glyph pairs by at least one of the following differences:
• the glyph is a new glyph that does not exist in the pre-existing typeface, or
• the code is a new code that does not exist in the pre-existing typeface, or
• the code is associated with a different glyph that exists in the pre-existing typeface,
the new glyph or the new code or the new code/glyph association being a function of the value of the parameter such that the new typeface is different for each different value of the identifier,
- of developing (58) a new coded text on the basis of the pre-existing coded text by replacing, in the pre-existing coded text, at least one code or group of codes from the pre-existing typeface allowing display of a character or a combination of characters from the digital book by the code or group of codes from the new typeface allowing display of the graphically identical character or combination of characters on any screen, this code or this group of codes from the new typeface having at least the code from the new code/glyph pair such that the new coded text developed in this manner is different for each different value of the identifier,
- of providing (64) the new coded text and the new typeface or a reference to the new typeface as a tattooed digital book.

2. Method according to Claim 1, in which the development (56) of the new typeface involves replacement of a code associated with a glyph in the pre-existing typeface by another, different code in order to create a new code/glyph pair, the value of the other code and/or the choice of the glyph from the pre-existing typeface from which the code is replaced being a function of the value of the parameter.

3. Method according to Claim 2, in which the replacement of a code from the pre-existing typeface by another code in order to develop the new typeface comprises the permutation of a plurality of the codes from the pre-existing typeface so as to create the new code/glyph pairs allowing display of the same glyphs as the pre-existing typeface, the permutation used being a function of the value of the parameter.

4. Method according to any one of the preceding claims, in which the development (56) of the new typeface comprises:
- the creation of a new glyph that is identical, when displayed on any screen, to the concatenation of a plurality of glyphs from the pre-existing typeface, and
- the association of a code with this new glyph, the new created glyph and/or the value of the code from this new glyph being a function of the value of the parameter.

5. Method according to any one of the preceding claims, in which the development (56) of the new typeface involves:
- the creation of a plurality of new glyphs, each of these new glyphs having at least one piece only of one and the same glyph from the pre-existing typeface so that the superposition of these new glyphs constitutes a glyph that is identical, when displayed on any screen, to this glyph from the pre-existing typeface,
- the association of a code with each of these new glyphs, the new created glyph and/or the value of the code from this new glyph being a function of the value of the parameter.

6. Method according to any one of the preceding claims, in which the development of the new typeface comprises the creation of a glyph that is identical, when displayed on any screen, to a glyph or to a combination of glyphs from the pre-existing typeface but defined by a vectorial coding that is different from the vectorial coding used for this glyph or this combination of glyphs in the pre-existing typeface, the different vectorial coding being linked by a bijective function to the value of a complementary information item that is encoded in the tattooed digital book.

7. Method according to any one of the preceding claims, in which the method involves the recording (62), in a database, of the value of the identifier linked by the bijective function to the value of the parameter used for developing the new typeface, which value is associated with the new typeface or with the new coded text or with a digital print from the new typeface or with a digital print from the new text.

8. Method according to any one of the preceding claims, in which the value used for the parameter is solely encodable in binary over a plurality of bits.

9. Computer program or information recording medium, **characterized in that** it has instructions for the execution of a method according to any one of the preceding claims when these instructions are executed by an electronic computer.

10. Device (4) for tattooing digital books with parameters linked by a bijective function to respective identifiers, the digital book containing a pre-existing coded text in which each character is coded by at least one code and a pre-existing typeface or a reference to a pre-existing typeface, each typeface having code/glyph pairs, each code/glyph pair associating a code from the coded text with a glyph that is used for displaying a character, this device having:
- an information recording medium, and
- a programmable electronic computer, capable of executing instructions recorded on the information recording medium,
**characterized in that** the information recording medium has instructions for implementing a method according to any one of Claims 1 to 8 when these instructions are executed by the electronic computer.

11. Set of tattooed digital books (12) that is obtained by implementing a method according to any one of Claims 1 to 8, each of these tattooed digital books being capable of displaying a text, on any screen, that is graphically identical to the text displayed by the other digital books from this set when this book is read by an electronic reader, each digital book containing, to this end:
- a coded text in which each character is coded by at least one code,
- a typeface or a reference to a typeface that is used for displaying the coded text on a screen, each typeface having code/glyph pairs, each code/glyph pair associating a code from the coded text with a glyph that is used for displaying a character, **characterized in that**:
- the typeface of each digital book has at least one different code/glyph pair that is distinguished from the existing code/glyph pairs in the typefaces of the other digital books from the set by at least one of the following differences:
• the glyph is a new glyph that does not exist in the typefaces of the other digital books from the set, or
• the code is a new code that does not exist in the typefaces of the other digital books from the set, or
• the same code is associated with other, different glyphs in the typefaces of the other digital books from the set,
- the coded text from each digital book has at least the code from the different code/glyph pair from its typeface, the text coded in this manner being different from the coded texts of the other digital books from the set.
